# EUROPÄISCHE PATENTSCHRIFT

(11) **EP 1 083 401 B1**
(45) Veröffentlichungstag und Bekanntmachung des Hinweises auf die Patenterteilung: **29.10.2003**
(21) Anmeldenummer: 00118798.8
(22) Anmeldetag: 30.08.2000
(51) Int. Cl.: G01B 5/00, B23K 26/02, H02K 41/02

(54) **Werkzeug-, Handhabungs- oder Messmaschine**
Machine tool, handling machine or measuring machine
Machine-outil, machine de manipulation ou machine de mesure

(30) Priorität: 03.09.1999 DE 19942083
(43) Veröffentlichungstag der Anmeldung: 14.03.2001
(73) Patentinhaber: BRANDSTETTER, Heinz Peter, 1130 Wien (AT)
(72) Erfinder: BRANDSTETTER, Heinz Peter, 1130 Wien (AT)
(74) Vertreter: Viering, Jentschura & Partner

(56) Entgegenhaltungen:
- EP-A- 0 275 321
- EP-A- 0 609 633
- DE-A- 19 541 085
- US-A- 3 857 075

## Beschreibung

Die Erfindung betrifft eine Werkzeug-, Handhabungs- oder Meßmaschine mit einem 2-Koordinaten-Stellantrieb zum Verfahren einer Arbeitseinheit in einer Arbeitsebene, welche von einer X-Richtung und einer dazu senkrechten Y-Richtung definiert wird, mit einer eine ebene Statorplattenfläche aufweisenden Statorplatte, welche Linearmotor-Statoren für den X- und Y-Antrieb für das Verfahren der Arbeitseinheit in der Arbeitsebene aufweist.

Herkömmliche Werkzeug-, Handhabungs- oder Meßmaschinen mit einem 2-Koordinaten-Stellantrieb verwenden entweder zwei kombinierte lineare Bewegungssysteme für die X- und Y-Richtung oder auch Mehrachsenroboter, zumeist Knickarmroboter, um beispielsweise einen Laserstrahl relativ zum Werkstück zu bewegen. Wenn die Laserstrahlung für den Transport durch Lichtleiterkabel ungeeignet ist, wie dies beim hauptsächlich zum Schneiden eingesetzten CO₂-Laser der Fall ist, muß der Strahl durch Spiegel bis zum Werkstück geleitet werden. Bei der häufig verwendeten sogenannten fliegenden Optik wird ein Portal entlang einer X-Achse auf zwei parallelen Führungen bewegt. Auf dem Portal sind die Führung und der Antrieb für eine senkrecht zur X-Achse verlaufende Y-Achse angebracht, die einen Schlitten quer zur X-Achse bewegen. Auf diesem Schlitten ist entlang einer Z-Achse eine Arbeitseinheit angebracht, die ihrerseits um zwei Drehachsen bewegbar sein kann, wenn neben flachen auch räumliche Werkstücke bearbeitet werden sollen. Im Falle vom Knickarmrobotern wird der Strahl über einen mehrgelenkigen Spiegelarm geführt, an dessen Ende die Arbeitseinheit sitzt, die von der Roboterhand in allen Freiheitsgraden relativ zum Werkstück geführt wird.

Der Nachteil von robotorgeführten Laseranlagen ist die geringe Reichweite, verbunden mit geringer Genauigkeit. Die Nachteile der kartesischen Bewegungssysteme, insbesondere der Portalanlagen mit fliegender Optik, bestehen neben der aufwendigen und teuren Bauweise mit hohem Wartungsaufwand darin, daß die vom Laserstrahl bis zum Werkstück zurückgelegte Strecke je nach der Position der Arbeitseinheit verschieden lang ist. Bei einem Bearbeitungsformat von 3m x 1,5m beträgt der Unterschied bis zu 4,5m, wodurch wegen der Divergenz des Laserstrahles Veränderungen in der Fokuslage und damit unterschiedliche Bearbeitungsergebnisse auftreten können. Dies wird bei herkömmlichen Anlagen durch mehr oder weniger komplexe, empfindliche und teure Maßnahmen zu verhindern versucht. Aufgrund der bis zu 300kg schweren Portale, die mit hoher Geschwindigkeit und Beschleunigung bewegt werden müssen, sind die Antriebe sehr leistungsstark und die Führungen, Lager und Maschinenbetten sehr kräftig ausgeführt, was zu Maschinengewichten von 5 bis 10t führt. Die Montageflächen für die Führungen müssen auf großen Werkzeugmaschinen bearbeitet werden, und die Führungen müssen genau ausgerichtet montiert werden. Die Führungen, Spindeln, Zahnstangen, Ritzel und Lager müssen ständig geschmiert werden und unterliegen einem hohen Verschleiß. Das Spiel und die Reibung sind systemimmanent.

Flächenantriebe haben demgegenüber viele Vorteile, wie eine hohe Effizienz des Fertigungsprozesses und eine hohe Flexibilität. Ein Nachteil ist die Strahlführung über lange scherenartige Spiegelgelenkarme, deren Schenkellängen bei einem Arbeitsbereich von 3m x 1,5m bis zu 2,5m ausmachen können. Diese Strahlführungen haben zwar eine konstante Strahlweglänge, begrenzen aufgrund ihrer Masse jedoch die Dynamik einer Lasermaschine und sind außerdem relativ teuer, wenn sie die erforderliche Genauigkeit haben sollen.

Aus der Offenlegungsschrift DE-A-19541085 ist eine Anlage zum Laserschweißen bekannt, bei der die Arbeitseinheit auf einer Statorplatte verschoben und die Laserstrahlung in einem Gelenkarm seitlich an die Arbeitseinheit angekoppelt wird.

Mit der Erfindung wird eine Werkzeug-, Handhabungs- oder Meßmaschine mit einem 2-Koordinaten-Stellantrieb geschaffen, bei der mit einfachen Mitteln und fertigungstechnisch geringem Aufwand eine hohe Dynamik und Genauigkeit bei verringerten Kosten und geringem Energieverbrauch erreicht wird.

Dies wird erreicht durch eine Werkzeug-, Handhabungs- oder Meßmaschine mit einem Gelenkarm, dessen eines Ende in X-Richtung von einem Gelenkarm-Winkelläufer bewegt wird, welcher eine Längskante der Statorplatte umgreift, und dessen freies Ende mit der Arbeitseinheit verbunden ist, wobei die Arbeitseinheit mittels des Gelenkarms selbst und/oder daran befestigten Leitungen versorgt wird.

Durch den Gelenkarm-Winkelläufer wird eine genaue Führung und Bewegung des Gelenkarms entlang der Längskante der Statorplatte bei erheblicher Verkürzung der Schenkellängen erreicht. Die bewegte Masse eines derartigen 2-Koordinaten-Stellantriebs liegt bei einem Zehntel gegenüber einer Portalmaschine. Der Gelenkarm-Winkelläufer ist praktisch reibungs-, verschleiß- und wartungsfrei, wobei Führungen, Spindeln, Zahnstangen, Ritzel, Lager, rotierende Motoren und Zahnriemen entfallen. Der die Längskante der Statorplatte umgreifende Gelenkarm-Winkelläufer gewährleistet ein genau definiertes und synchrones Verfahren mit der Arbeitseinheit in X-Richtung, so daß der Gelenkarm-Winkelläufer und die Arbeitseinheit in dieser Richtung stets die gleichen Koordinatenwerte haben. Durch die Anordnung des Gelenkarm-Winkelläufers an der Längskante der Statorplatte wird ein seitliches Versetzen, d.h. in Y-Richtung desselben infolge größerer äußerer Kräfte vermieden, da der Gelenkarm-Winkelläufer die Längskante der Statorplatte formschlüssig umgreift und an dieser gelagert ist. Vergrößerungen des Arbeitsbereiches sind allein durch größere Statoren und Verlängerung der Gelenkarmschenkel möglich, wobei die Länge des Gelenkarms nur von der Breite, nicht aber von der Länge des Arbeitsbereiches abhängig ist.

Die Arbeitseinheit wird von einem Flächenläufer getragen (2D-Linearmotor als Pendant zum Gelenkarm-Winkelläufer), der luftgelagert ist und mit Strom sowie mit Luft versorgt wird. Die Luftlagerung hat neben Reibungs- und Verschleißfreiheit auch den Vorteil eines einfachen Aufbaus.

Wenn die Arbeitseinheit mit dem Flächenläufer mittels des Gelenkarms selbst versorgt wird, kann der Gelenkarm in Form einer Leitung oder eines leitungsartigen Elements ausgebildet sein. Ferner können die Leitungen innerhalb des Gelenkarmes verlaufen oder außerhalb desselben an diesem befestigt sein, so daß keine zusätzlichen sogenannten Energieketten oder Kabeltrommeln erforderlich sind, die bei der Bearbeitung des Werkstückes hinderlich sein können.

Der Gelenkarm-Winkelläufer kann eine erste Läuferfläche aufweisen, welche parallel zu der Statorplatte verlaufend mit der gleichen Nutung zusammenwirkt, welche für den Transport der Arbeitseinheit in X-Richtung verantwortlich ist. Dadurch wird eine zuverlässige und genau definierte Steuerung der Arbeitseinheit erreicht, ohne von der X-Richtung der Statorplatte abzuweichen. Dabei ist kein zusätzliches Steuerelement erforderlich, welches den Transport der Arbeitseinheit in Abhängigkeit von der Nutung der Statorplatte bewerkstelligt, da dies über dieselbe Steuerung wie für den Flächenläufer gesteuert wird.

Zur exakten Führung des Gelenkarms kann der Gelenkarm-Winkelläufer eine zu der Statorplattenfläche senkrechte Führungsfläche aufweisen, wobei der Gelenkarm-Winkelläufer gegen eine sich in X-Richtung erstreckende Stirnfläche der Statorplatte, welche sich rechtwinklig zu der Statorplattenfläche erstreckt, durch einen Luftfilm gepreßt wird, der durch magnetische Vorspannung entsteht. Der Winkelläufer ist daher in zwei Ebenen fixiert, d.h. einerseits an der Statorplattenfläche durch die in X-Richtung fortschreitende Nutung und die magnetische Vorspannung gegen einen Luftfilm, und andererseits an der sich rechtwinklig zur Statorplattenfläche erstreckenden Stirnfläche der Statorplatte, so daß auch die Einwirkung größerer Kräfte auf die Führung und Beweglichkeit des Gelenkarm-Winkelläufers keinen Einfluß hat. Die in X-Richtung verlaufenden Nuten sind für die Y-Bewegung zuständig und umgekehrt, d.h. die Nutung für die X-Richtung besteht aus Nuten, die in Y-Richtung verlaufen, sich aber in X-Richtung wiederholen, d.h. fortschreiten.

Um den gesamten Gelenkarm längs der Statorplatte mit hoher Genauigkeit gesteuert verfahren zu können, kann der Gelenkarm-Winkelläufer eine zu der Statorplattenfläche senkrechte zweite Läuferfläche aufweisen, welche mit einer Statornutung zusammenwirkt, welche in einer sich in X-Richtung erstreckenden Stirnfläche der Statorplatte ausgebildet ist, welche sich rechtwinklig zu der Statorplattenfläche erstreckt. Die Statornutung kann dabei senkrecht zur Statorplattenfläche entlang der Stirnfläche der Statorplatte ausgebildet sein. Dadurch wird erreicht, daß die aktive Polnutenfläche des Gelenkarm-Winkelläufers vergrößert ist, die sich über beide Schenkel des Winkels erstreckt. So läßt sich ein starker Antrieb erreichen, ohne viel Statorplattenfläche von dem Winkel abzudecken, was anderenfalls den Arbeitsbereich verkleinern würde.

Im Falle einer Laserstrahlübertragung ist der Gelenkarm ein hohler Spiegelgelenkarm, durch welchen ein am winkelläuferseitigen Ende eingekoppelter Laserstrahl läuft und aus der Arbeitseinheit austritt. Die Laserstrahlübertragung mittels Umlenkspiegel ist einfach und zuverlässig, wobei jeweils zwei 90°-Umlenkspiegel drehbar verbunden ein Drehgelenk bilden und der Spiegelgelenkarm die zur gewünschten räumlichen Beweglichkeit erforderliche Anzahl von Drehgelenken aufweist. Der Strahlweg innerhalb des hohlen Spiegelgelenkarmes ist von Haus aus staubdicht, wobei der restliche Strahlweg durch eine Umhausung mit Faltenbalg ebenfalls abgedichtet werden kann. Das komplette Strahlführungssystem mit allen Umlenkspiegeln hängt an einer Statorplatte und kann werksseitig vorjustiert werden. Die Freiheitsgrade des Spiegelgelenkarmes können auch für die Höhenbewegung der Arbeitseinheit ausgenützt werden, d.h. für eine Bewegung der Arbeitseinheit in Z-Richtung, da die Arbeitseinheit gelenkig mit dem Gelenkarm verbunden ist. Bei der senkrecht zur Statorplattenfläche bewegbaren Arbeitseinheit, z.B. einer fest mit dem Gelenkarm verbundenen Strahlfokussierung, kann der einjustierte Laserstrahl immer in der Mitte und parallel zur Z-Achse austreten. Der Spiegelgelenkarm kann auch derart ausgebildet sein, daß die Arbeitseinheit um zwei Drehachsen drehbar ist, die senkrecht zueinander liegen, so daß sich der Laserstrahl auf jeden Punkt des Werkstückes in beliebiger Richtung einstellen läßt, wobei eine dementsprechende Übertragung des Laserstrahls über zusätzliche Spiegelreflexionen erfolgt. Die Arbeitseinheit kann an dem Gelenkarm hängend unterhalb der Statorplatte, d.h. im Überkopfbetrieb, oder aber auch anders angeordnet sein. Der Überkopfbetrieb hat den Vorteil, daß die Arbeitseinheit in Z-Richtung über einen großen Weg hinweg zu einem auf einem ortsfesten Arbeitstisch angeordneten Werkstück hin bewegbar ist, wodurch die Bearbeitung von Werkstücken mit großer vertikaler Ausdehnung möglich ist. Dies ist zum Beispiel bei Portalanlagen nur begrenzt möglich. Sämtliche Versorgungs- und Steuerleitungen für den Flächenläufer und das Werkzeug können am Spiegelgelenkarm befestigt bzw. aufgehängt werden, so daß sie nicht je nach Position des Flächenläufers mehr oder weniger große Schlaufen bilden.

In vorteilhafter Weise kann ein Kompensationsläufer zum Konstanthalten der Laserstrahllänge vom Austreten aus dem Laser bis zum Auftreffen auf das Werkstück unabhängig von der Stellung der Arbeitseinheit vorgesehen sein, wobei der Kompensationsläufer eine Reflexionseinheit aufweist, welche den in X-Richtung verlaufenden Laserstrahl seitlich versetzt in die entgegengesetzte X-Richtung zurückreflektiert, bis dieser in den Gelenkarm eingekoppelt wird, wobei der Kompensationsläufer im Abstand von dem Gelenkarm-Winkelläufer angeordnet ist und jeweils in die gleiche Richtung wie der Gelenkarm-Winkelläufer gesteuert bewegt wird, jedoch nur um die halbe Stellstrecke verglichen mit derjenigen Stellstrecke, welche der Gelenkarm-Winkelläufer zurücklegt. Dadurch werden Divergenzprobleme und eine unterschiedliche Fokussierung des Laserstrahls in Abhängigkeit von der Stellung des Gelenkarmes vermieden, weil so erreicht wird, daß die Laserstrahllänge unabhängig von der Position der Arbeitseinheit ausgehend von dem ortsfesten Laser bis zur Austrittsstelle auf das Werkstück stets konstant bleibt und somit Laserstrahl-Divergenzprobleme aufgrund unterschiedlicher Strahllängen vermieden werden. Hierbei ist der Laser an dem einen Ende der Laserstrahlübertragungsstrecke festgelegt, während an dem anderen Ende der Laserstrahlübertragungsstrecke die Arbeitseinheit vorgesehen ist, die entsprechend der Bewegung des GelenkarmGelenkarm-Winkelläufers bewegbar ist, wobei der Abstand zwischen dem Gelenkarm-Winkelläufer und dem Kompensationsläufer in Abhängigkeit von der Stellung des Gelenkarm-Winkelläufers variiert.

Der Kompensationsläufer kann als ein Kompensations-Winkelläufer ausgebildet sein, welcher eine erste Läuferfläche aufweist, welche parallel zu der Statorplatte verlaufend mit der gleichen Nutung zusammenwirkt, welche für den Transport der Arbeitseinheit in X-Richtung verantwortlich ist. Dies hat den Vorteil, daß keine gesonderte Stator-Polnutung vorgesehen werden muß, sondern diejenige genutzt werden kann, welche für den Gelenkarm-Winkelläufer ohnehin vorhanden ist.

Wenn der Kompensations-Winkelläufer eine zu der Statorplattenfläche senkrechte Führungsfläche aufweist, welche magnetisch gegen eine sich in X-Richtung erstreckende Stirnfläche der Statorplatte vorgespannt ist, welche sich rechtwinklig zu der Statorplattenfläche erstreckt, wird eine exakte Führung des Kompensations-Winkel läufers erreicht. Der Kompensations-Winkelläufer wird somit an der gleichen Führungsfläche geführt, an der auch der Gelenkarm-Winkelläufer bewegbar geführt wird, so daß Ungenauigkeiten in der Ausrichtung der beiden Winkelläufer zueinander vermieden werden.

Der Kompensations-Winkelläufer kann eine zu der Statorplattenfläche senkrechte zweite Läuferfläche aufweisen, welche mit einer Statornutung zusammenwirkt, welche in einer sich in X-Richtung erstreckenden Stirnfläche der Statorplatte ausgebildet ist, welche sich rechtwinklig zu der Statorplattenfläche erstreckt. Dadurch wird erreicht, daß die aktive Polnutenfläche des Kompensations-Winkelläufers vergrößert ist, die sich über beide Schenkel des Winkels erstreckt. So läßt sich ein starker Antrieb erreichen, ohne viel Statorplattenfläche von dem Winkel abzudecken, was anderenfalls den Arbeitsbereich verkleinern würde.

Der Gelenkarm-Winkelläufer, der Flächenläufer sowie der Kompensations-Winkelläufer werden bevorzugt luftgelagert. Sie können jedoch auch mechanisch geführt werden, wobei Führungselemente vorgesehen sein müssen, die entweder auf der Statorplattenfläche oder auf der senkrechten zweiten Läuferfläche oder auf beiden montiert sind. Wenn die Führungselemente auf der Statorplattenfläche montiert sind, kann der Winkelläufer entfallen. Der Läufer ist dann gegen seitliche Kräfte durch die Führung gesichert.

In vorteilhafter Weise kann der Gelenkarm Lichtleitkabel tragen, durch welche Laserstrahlen geleitet werden können. Bei einer derartigen Übertragung von Laserstrahlen können Spiegelgelenkarme durch normale Gelenkarme ersetzt werden und die Strahlwegkompensationen entfallen, sofern das Lichtleitkabel stets durchgängig vom Laser bis zur Austrittsstelle auf das Werkstück hinführt. Sofern jedoch die Einkopplung des Laserstrahls nach einer Luftstrecke in das Lichtleitkabel am Gelenkarm-Winkelläufer erfolgt, kann wie bei der Spiegelgelenkarm-Variante ein Kompensationsläufer vorgesehen sein.

Ferner kann der Gelenkarm elektrische Leitungen tragen, wobei wenigstens ein Teil der elektrischen Leitungen zur Datenübertragung dienen. Die elektrischen Leitungen können innerhalb des Gelenkarmes verlaufen oder außerhalb an diesem befestigt sein und können für den Antrieb und die Steuerung der Arbeitseinheit vorgesehen sein. Da der Gelenkarm somit die Leitungen trägt, muß zumindest in Y-Richtung kein Längenausgleich für die Leitungen erfolgen.

Der Gelenkarm kann auch Leitungen für den Transport der für die Luftlagerung benötigten Druckluft und der Arbeitsmedien Flüssigkeit oder Gas tragen, wenn die Arbeitseinheit mit diesen Medien betrieben werden soll. Die Leitungen können als flexible Rohrleitungen ausgebildet sein und innerhalb oder außerhalb des Gelenkarms verlegt sein. Gas wird häufig zum Schutz und zur Kühlung beim Laserschneiden verwendet, während Wasser beispielsweise beim Wasserstrahlschneiden Anwendung findet.

Der Gelenkarm kann derart ausgebildet sein, daß er zwei langgestreckte und mittels eines Gelenks miteinander verbundene Schenkel aufweist und im Bereich des Gelenks an der Statorplatte oder einer zusätzlichen Abstützfläche abgestützt ist. Die Abstützung des Gelenks gewährleistet eine Führung in etwa parallel zur Statorfläche gegen die Wirkung des Eigengewichtes der Schenkel des Gelenkarmes und daran angeordneter Leitungen. Eine Beschädigung des Gelenkarms beispielsweise bei Berührung mit dem Werkstück kann daher nicht auftreten. Die zusätzliche Abstützfläche (ohne Nutung, ferromagnetisch, weichmagnetisch) verläuft fugenlos zur Statorplattenfläche in der gleichen Ebene und ist so bemessen, daß sie in allen möglichen Positionen des Gelenkarmes, die außerhalb der Lauffläche liegen, den Gelenkarm abstützen kann.

Nach einer bevorzugten Ausführungsform der Erfindung ist ein zweiter Gelenkarm-Winkelläufer vorgesehen ist, welcher die andere Längskante der Statorplatte umgreift, wobei die beiden Gelenkarm-Winkelläufer unterschiedlichen Arbeitsbereichen zugeordnet sind. Einem solchen zweiten Gelenkarm-Winkelläufer können eine Arbeitseinheit, ein Kompensations-Winkelläufer und eine Fokussierung zugeordnet sein, welche zusammen ein zweites Laserstrahlführungssystem bilden, das vom gleichen Laser des ersten Systems beschickt werden und mittels derselben Steuerung an einer anderen Stelle das gleiche Programm abarbeiten kann, oder von einem zweiten Laser mit einer zweiten Steuerung unabhängig vom ersten System durch ein anderes Programm gesteuert werden kann. Die Maschinenkapazität kann daher verdoppelt werden. Eine spätere Nachrüstung ist im Prinzip möglich. Beispielsweise kann eine Arbeitseinheit an einem Ende des Werkstücks mit der Bearbeitung beginnen und das Werkstück zur Mitte hin bearbeiten, während die zweite Arbeitseinheit in der Mitte beginnt und das Werkstück bis zum anderen Ende hin bearbeitet. Da beide Arbeitseinheiten simultan arbeiten können, wird einerseits die Arbeitsgeschwindigkeit erhöht und andererseits bei kleinen Verfahrwegen der beiden Gelenkarm-Winkelläufer eine große Arbeitslänge realisiert. Beide Arbeitseinheiten können aber jederzeit allein und über den gesamten Bereich eingesetzt werden. Damit können Spitzenleistungen abgedeckt werden, wenn zwei Arbeitseinheiten zum Einsatz gelangen. Im Einzelbetrieb können die beiden Arbeitseinheiten abwechselnd eingesetzt werden, um diese gleichmäßig abzunützen.

Ferner können weitere Linearmotoren unabhängig und gleichzeitig auf der Statorplattenfläche eingesetzt werden, um parallele Arbeitsschritte zu erledigen, z.B. Markieren von Teilen (auch bereits, bevor die Teile ausgeschnitten wurden), oder das Entfernen und das sortierte Ablegen von fertigen Teilen.

Die Erfindung wird mit Bezug auf die Zeichnung näher erläutert. In der Zeichnung zeigen:
Fig. 1 eine perspektivische Ansicht eines 2-Koordinaten-Stellantriebs mit Luftlagerführung nach einer Ausführungsform der Erfindung;
Fig. 2 eine Ansicht des Stellantriebs aus Fig. 1 von unten gesehen in eingelenktem Zustand des Gelenkarmes;
Fig. 3 eine Seitenansicht des Stellantriebs aus Fig. 1 in ausgelenktem Zustand des Gelenkarmes;
Fig. 4 eine Vorderansicht des Stellantriebs aus Fig. 1; und
Fig. 5 eine schematische Ansicht einer Doppelanordnung des Stellantriebs aus Fig. 1 von unten gesehen.

Mit Bezug auf die Zeichnung wird ein 2-Koordinaten-Stellantrieb einer Werkzeug-, Handhabungs- oder Meßmaschine gemäß der Erfindung erläutert.

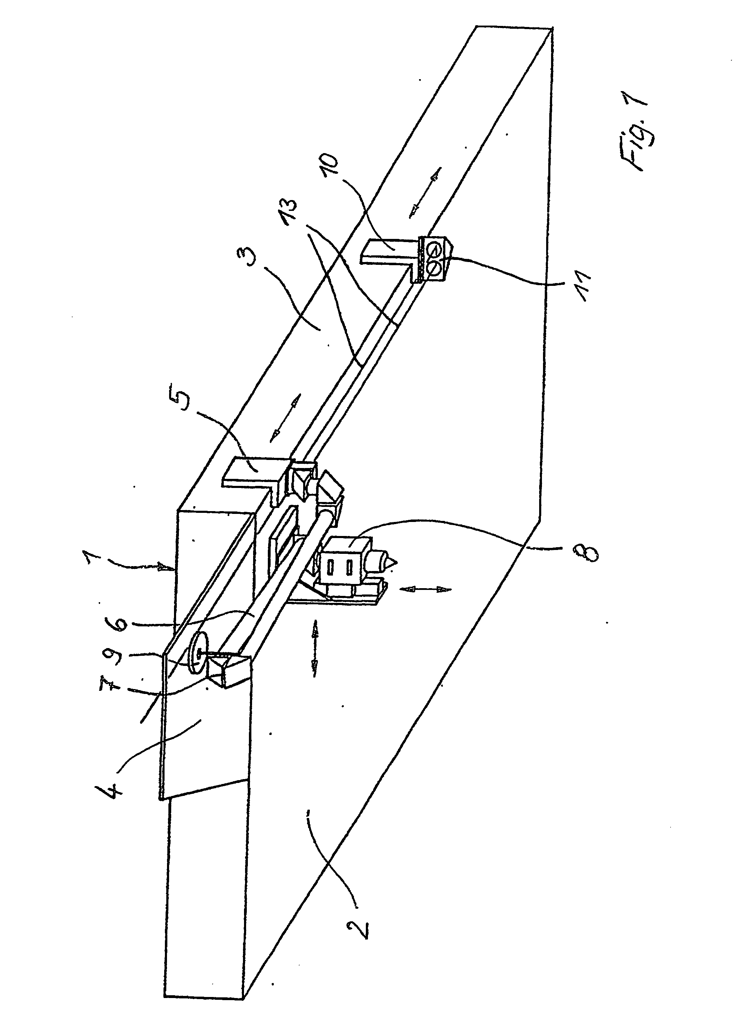

Wie aus Fig. 1 ersichtlich, weist ein 2-Koordinaten-Stellantrieb mit Luftlagerführung eine Statorplatte 1 mit einer Statorplattenfläche 2, einer rechtwinklig zu dieser verlaufenden Stirnfläche 3 und einer an einer Längsseite der Statorplattenfläche 2 in deren Ebene verlaufenden, zusätzlichen trapezförmigen Abstützfläche 4 auf. Die Arbeitsebene des Stellantriebs wird von einer der Längsrichtung der Statorplatte entsprechenden X-Richtung und einer dazu senkrechten Y-Richtung definiert. Die Statorplattenfläche 2 und die Stirnfläche 3 der Statorplatte 1 sind mit einer linearen Polnutung versehen. An einer Längskante der Statorplatte 1 ist ein Gelenkarm-Winkelläufer 5 angeordnet, der in X-Richtung antreibbar ist. Ein Gelenkarm 6 in Form eines hohlen Spiegelgelenkarmes mit zwei gleich langen, langgestreckten und mittels eines Gelenks 7 miteinander verbundenen Schenkeln ist mit seinem einen Ende an dem Gelenkarm-Winkelläufer 5 abgestützt und an seinem anderen Ende mit einer Arbeitseinheit 8 verbunden, welche ihrerseits von einem Flächenläufer getragen wird und quer zur Längsrichtung der Statorplatte 1 und senkrecht nach unten und oben antreibbar ist. Das Gelenk 7 des Gelenkarmes 6 ist an einem luftgelagerten Gleitelement 9 aufgehängt, das sich an der Statorplattenfläche 2 und der zusätzlichen Abstützfläche 4 vom Gelenkarm 6 gezogen bewegt. Der Gelenkarm-Winkelläufer 5 weist zwei rechtwinklig zueinander angeordnete Schenkel auf, von denen der parallel zu der Statorplatte 1 verlaufende Schenkel kürzer als der dazu rechtwinklige und parallel zur Stirnfläche der Statorplatte 1 verlaufende Schenkel ist. Der kürzere Schenkel des Gelenkarm-Winkelläufers 5 ist mit einer ersten Läuferfläche versehen, welche mit der gleichen Polnutung zusammenwirkt, welche für den Transport der Arbeitseinheit 8 in X-Richtung verantwortlich ist. Der längere Schenkel des GelenkarmGelenkarm-Winkelläufers 5 weist eine zweite Läuferfläche, welche mit der in der Stirnfläche 3 der Statorplatte 1 ausgebildeten Polnutung zusammenwirkt, und eine Führungsfläche auf, welche magnetisch gegen die Stirnfläche 3 der Statorplatte 1 vorgespannt ist. Eine derartige Ausbildung des Gelenkarmwinkelläufers 5 ermöglicht eine Vergrößerung des Arbeitsbereichs, da der kürzere Schenkel des GelenkarmGelenkarm-Winkelläufers 5 nur einen geringen Bereich an der Statorplattenfläche 2 einnimmt, wobei die sich über beide Schenkel des Gelenkarm-Winkelläufers 5 erstreckende aktive Polnutenfläche vergrößert ist und der Gelenkarm eine exakte Führung erhält.

Ferner ist ein Kompensations-Winkelläufer 10 mit einer Reflexionseinheit 11 an derselben Längskante der Statorplatte 1, an welcher der Gelenkarm-Winkelläufer 5 angebracht ist, im Abstand von diesem in X-Richtung antreibbar angeordnet. Der Kompensations-Winkelläufer 10 ist wie der Gelenkarm-Winkelläufer 5 aus zwei Schenkeln gebildet, von denen der parallel zu der Statorplatte 1 verlaufende Schenkel kürzer als der dazu rechtwinklige und parallel zur Stirnfläche der Statorplatte 1 verlaufende Schenkel ist. Der kürzere Schenkel des Kompensations-Winkelläufers 10 ist mit einer ersten Läuferfläche versehen, welche mit der gleichen Polnutung zusammenwirkt, welche für den Transport der Arbeitseinheit 8 in X-Richtung verantwortlich ist. Der längere Schenkel des Kompensations-Winkelläufers 10 weist eine zweite Läuferfläche, welche mit der in der Stirnfläche 3 der Statorplatte 1 ausgebildeten Polnutung zusammenwirkt, und eine Führungsfläche auf, welche magnetisch gegen die Stirnfläche 3 der Statorplatte 1 vorgespannt ist. Der Kompensations-Winkelläufer 10 hält die Laserstrahllänge vom Austreten aus dem Laser bis zum Auftreffen auf das Werkstück unabhängig von der Stellung der Arbeitseinheit konstant.

Die Arbeitseinheit 8 am Ende des Gelenkarms 6 ist an einem Läufer angebracht und wird mittels desselben in Y-Richtung verfahren. Gleichfalls ist die Arbeitseinheit 8 in einer zur X-und Y-Richtung senkrechten Z-Richtung verfahrbar und um zwei zueinander senkrecht liegenden Drehachsen drehbar, so daß sich die Arbeitseinheit 8 auf jeden Punkt des Werkstücks in beliebiger Richtung einstellen läßt. Bei der Ausführungsform wird das auf einem ortsfesten Arbeitstisch liegende Werkstück mittels der Arbeitseinheit 8 im Überkopfbetrieb bearbeitet, d.h. die Arbeitseinheit 8 befindet sich unterhalb der Statorplatte 1 und bearbeitet das Werkstück von oben, wodurch ein ausreichend großer Abstand zwischen der Arbeitseinheit und dem Werkstück beispielsweise zum Erzielen größerer Hübe erreicht wird.

Wie aus Fig. 2 ersichtlich, ist an der einen Längsseite der Statorplatte 1 ein ortsfester Laser 12 angeordnet und zu der Reflexionseinheit 11 derart ausgerichtet, daß von dem Laser 12 ein Laserstrahl 13 ausgesendet wird, der von der Reflexionseinheit 11 seitlich versetzt in Längsrichtung der Statorplatte 1 zurückreflektiert und in den Gelenkarm 6 eingekoppelt wird. Der Laserstrahl 13 wird weiter über Spiegel durch den hohlen Gelenkarm geleitet und tritt an der Arbeitseinheit 8 aus. Der Kompensations-Winkelläufer 10 wird in die gleiche Richtung wie der Gelenkarm-Winkelläufer 5 gesteuert bewegt, jedoch nur um die halbe Stellstrecke verglichen mit derjenigen Stellstrecke, welche der Gelenkarm-Winkelläufer 5 zurücklegt, so daß die Länge des Laserstrahles 13 vom Austreten aus dem Laser 12 bis zum Auftreffen auf das Werkstück unabhängig von der Stellung der Arbeitseinheit 8 gleich bleibt und somit Divergenzprobleme des Laserstrahles 13 aufgrund unterschiedlicher Strahllängen vermieden werden. Während der Weg des Laserstrahls 13 innerhalb des Gelenkarmes 6 von Haus aus staubdicht ist, wird der restliche Weg durch eine Staubschutzumhausung 14 abgedichtet.

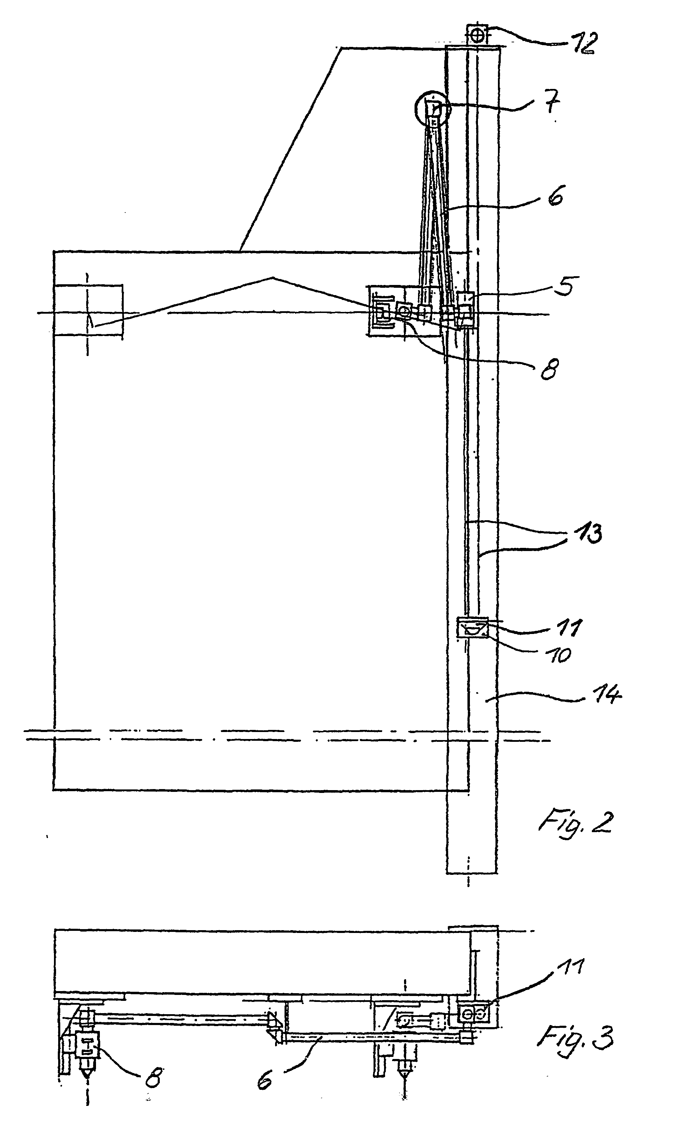

Während in Fig. 2 der Gelenkarm 6 eingelenkt ist, d.h. die Arbeitseinheit 8 auf der Seite des Gelenkarm-Winkelläufers 5 ist, zeigt Fig. 3 den Gelenkarm 6 in seiner ausgelenkten Stellung, in der sich die Arbeitseinheit 8 auf der dem Gelenkarm-Winkelläufer 5 gegenüberliegenden Seite befindet.

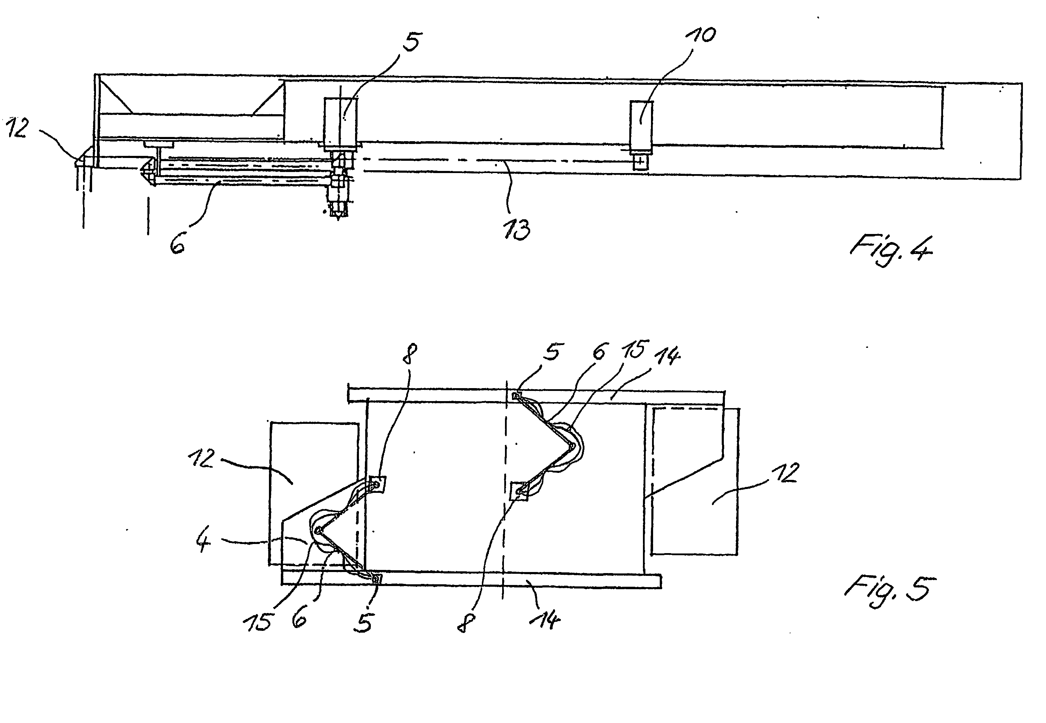

In Fig. 4 ist eine Vorderansicht des Stellantriebs aus Fig. 1 gezeigt, wobei sich der Gelenkarm 6 in seiner eingelenkten Stellung befindet. Es ist ersichtlich, daß der vom Laser 12 ausgehende Laserstrahl 13 in der gleichen Ebene wie der von der Reflexionseinheit 10 zurückreflektierte Laserstrahl 13 liegt.

Aus Fig. 5 ist schematisch eine Doppelanordnung des Stellantriebs aus Fig. 1 ersichtlich, wobei die beiden Strahlführungssysteme von unterschiedlichen Lasern 12 für den Laserstrahl 13 betrieben werden, die jeweils die Hälfte des Arbeitsbereiches so abarbeiten, daß sie sich gegenseitig nicht stören. Hierbei umgreifen die Gelenkarm-Winkelläufer 5 der jeweiligen Strahlführungssysteme die einander gegenüberliegenden Längskanten der Statorplatte 1, wobei die beiden Gelenkarm-Winkelläufer 5 unterschiedlichen Arbeitsbereichen zugeordnet sind. Die Gelenkarme 6 befinden sich in der Darstellung einerseits im Bereich der zusätzlichen trapezförmigen Abstützfläche 4 und andererseits im Bereich der Statorplattenfläche 2. Eine solche Doppelanordnung ist sehr effizient und kann die Maschinenkapazität verdoppeln. An den Gelenkarmen 6 sind elektrische Leitungen 15 zur Steuerung der Arbeitseinheiten 8 befestigt, welche in Y-Richtung aufgrund der konstanten Schenkellängen der Gelenkarme 6 keinen Längenausgleich benötigen.

## Patentansprüche

1. Werkzeug-, Handhabungs- oder Meßmaschine mit einem 2-Koordinaten-Stellantrieb zum Verfahren einer Arbeitseinheit (8) in einer Arbeitsebene, welche von einer X-Richtung und einer dazu senkrechten Y-Richtung definiert wird, mit einer eine ebene Statorplattenfläche (2) aufweisenden Statorplatte (1), welche Linearmotor-Statoren für den X- und Y-Antrieb für das Verfahren der Arbeitseinheit (8) in der Arbeitsebene aufweist, **gekennzeichnet durch** einen Gelenkarm (6), dessen eines Ende in X-Richtung von einem Gelenkarm-Winkelläufer (5) bewegt wird, welcher eine Längskante der Statorplatte (1) umgreift, und dessen freies Ende mit der Arbeitseinheit (8) verbunden ist, wobei die Arbeitseinheit (8) mittels des Gelenkarms (6) selbst und/oder daran befestigten Leitungen versorgt wird.

2. Maschine nach Anspruch 1, **dadurch gekennzeichnet, daß** der Gelenkarm-Winkelläufer (5) eine erste Läuferfläche aufweist, welche parallel zu der Statorplatte (1) verlaufend mit einer Nutung zusammenwirkt, welche für den Transport der Arbeitseinheit (8) in X-Richtung verantwortlich ist.

3. Maschine nach Anspruch 2, **dadurch gekennzeichnet, daß** der Gelenkarm-Winkelläufer (5) eine zu der Statorplattenfläche (2) senkrechte Führungsfläche aufweist, welche magnetisch gegen eine sich in X-Richtung erstreckende Stirnfläche (3) der Statorplatte (1) vorgespannt ist, welche sich rechtwinklig zu der Statorplattenfläche (2) erstreckt.

4. Maschine nach Anspruch 2, **dadurch gekennzeichnet, daß** der Gelenkarm-Winkelläufer (5) eine zu der Statorplattenfläche (2) senkrechte zweite Läuferfläche aufweist, welche mit einer Statornutung zusammenwirkt, welche in einer sich in X-Richtung erstreckenden Stirnfläche (3) der Statorplatte (1) ausgebildet ist, welche sich rechtwinklig zu der Statorplattenfläche (2) erstreckt.

5. Maschine nach einem der Ansprüche 1 bis 4, **dadurch gekennzeichnet, daß** der Gelenkarm (6) ein hohler Spiegelgelenkarm ist, durch welchen ein am winkelläuferseitigen Ende eingekoppelter Laserstrahl (13) läuft und aus der Arbeitseinheit (8) austritt.

6. Maschine nach Anspruch 5, **gekennzeichnet durch** einen Kompensationsläufer zum Konstanthalten der Laserstrahllänge vom Austreten aus dem Laser bis zum Auftreffen auf das Werkstück unabhängig von der Stellung der Arbeitseinheit (8), wobei der Kompensationsläufer eine Reflexionseinheit (11) aufweist, welche den in X-Richtung verlaufenden Laserstrahl (13) seitlich versetzt in X-Richtung zurückreflektiert, bis dieser in den Gelenkarm (6) eingekoppelt wird, wobei der Kompensationsläufer im Abstand von dem Gelenkarm-Winkelläufer (5) angeordnet ist und jeweils in die gleiche Richtung wie der Gelenkarm-Winkelläufer (5) gesteuert bewegt wird, jedoch nur um die halbe Stellstrecke verglichen mit derjenigen Stellstrecke, welche der Gelenkarm-Winkelläufer (5) zurücklegt.

7. Maschine nach Anspruch 6, **dadurch gekennzeichnet, daß** der Kompensationsläufer als ein Kompensations-Winkelläufer (10) ausgebildet ist, welcher eine erste Läuferfläche aufweist, welche parallel zu der Statorplatte (1) verlaufend mit der gleichen Nutung zusammenwirkt, welche für den Transport der Arbeitseinheit (8) in X-Richtung verantwortlich ist.

8. Maschine nach Anspruch 7, **dadurch gekennzeichnet, daß** der Kompensations-Winkelläufer (10) eine zu der Statorplattenfläche (2) senkrechte Führungsfläche aufweist, welche magnetisch gegen eine sich in X-Richtung erstreckende Stirnfläche (3) der Statorplatte (1) vorgespannt ist, welche sich rechtwinklig zu der Statorplattenfläche (2) erstreckt.

9. Maschine nach Anspruch 7, **dadurch gekennzeichnet, daß** der Kompensations-Winkelläufer (10) eine zu der Statorplattenfläche (2) senkrechte zweite Läuferfläche aufweist, welche mit einer Statornutung zusammenwirkt, welche in einer sich in X-Richtung erstreckenden Stirnfläche (3) der Statorplatte (1) ausgebildet ist, welche sich rechtwinklig zu der Statorplattenfläche (2) erstreckt.

10. Maschine nach Anspruch 1, **dadurch gekennzeichnet, daß** der Gelenkarm (6) Lichtleitkabel trägt, durch welche Laserstrahlen (13) geleitet werden können.

11. Maschine nach einem der Ansprüche 1 bis 10, **dadurch gekennzeichnet, daß** der Gelenkarm (6) elektrische Leitungen trägt.

12. Maschine nach Anspruch 11, **dadurch gekennzeichnet, daß** wenigstens ein Teil der elektrischen Leitungen zur Datenübertragung dienen.

13. Maschine nach einem der Ansprüche 1 bis 12, **dadurch gekennzeichnet, daß** der Gelenkarm (6) Leitungen für den Transport der Arbeitsmedien Druckluft, Flüssigkeit oder Gas trägt.

14. Maschine nach einem der Ansprüche 1 bis 13, **dadurch gekennzeichnet, daß** der Gelenkarm (6) zwei langgestreckte und mittels'eines Gelenks (7) miteinander verbundene Schenkel aufweist und im Bereich des Gelenks (7) an der Statorplatte (1) oder einer zusätzlichen Abstützfläche (4) abgestützt ist.

15. Maschine nach einem der Ansprüche 1 bis 14, **dadurch gekennzeichnet, daß** ein zweiter Gelenkarm-Winkelläufer (5) vorgesehen ist, welcher die andere Längskante der Statorplatte (1) umgreift, wobei die beiden Gelenkarm-Winkelläufer (5) unterschiedlichen Arbeitsbereichen zugeordnet sind.

## Claims

1. Tool-, handling- or measuring-machine, comprising a 2-coordinate-actuator for moving a working unit (8) within a working plane being defined by a X-direction and a Y-direction perpendicular thereto, a stator-plate (1) being provided with a plane-shaped stator-plate surface (2) and having linear motor stators to provide the acuation for moving the working unit (8) within the working plane into the X- and Y-direction, **characterized by** an articultated arm (6) whose one end is moved into the X-direction of an articultated arm - angle traveler (5) which encompasses a longitudinal edge of the stator plate (1), and whose free end is connected to the working unit (8), said working unit (8) being supplied by the articultated arm (6) itself and/or by lines fixed thereto.

2. Machine according to claim 1, **characterized in that** said articultated arm - angle traveler (5) comprises a first traveler surface cooperating with a groove while extending in parallel to said stator plate (1), said groove being responsible for the transport of said working unit (8) into said X-direction.

3. Machine according to claim 2, **characterized in that** said articultated arm - angle traveler (5) comprises a guide surface being perpendicular to said stator-plate surface (2) and being magnetically biased against a front surface (3) of said stator plate (1), [said front surface] extending into said X-direction and extending perpendicular to said stator-plate surface (2).

4. Machine according to claim 2, **characterized in that** said articultated arm - angle traveler (5) comprises a second traveler surface being perpendicular to said stator-plate surface (2) and cooperating with a stator groove, [said stator groove] being formed in a front surface (3) of said stator plate (1), [said front surface] extending into said X-direction and perpendicular to said stator-plate surface (2).

5. Machine according to anyone of the claims 1 to 4, **characterized in that** said articultated arm (6) is a hollow mirror articultated arm (6) being passed by a laser beam being coupled into the articultated arm - sided end and emerging from said working unit.

6. Machine according to claim 5, **characterized by** a compensation traveler for keeping the laser beam length constant until its impinging onto the work piece independently of the position of the working unit (8), said compensation traveler comprising a relection unit (11) which reflects the laser beam (13) emerging into said X-direction to be laterally dislocated into said X-direction until [said laser beam] being coupled into said articultated arm (6), said compensation traveler being spaced apart from said articultated arm - angle traveler (5) and being moved under control into the same direction as said articultated arm - angle traveler (5), but only by the half actuating distance if compared to said actuating distance being traveled by said articultated arm - angle traveler (5).

7. Machine according to claim 6, **characterized in that** said compensation traveler is a compensation - angle traveler (10) which comprises a first traveler surface, [said traveler surface] cooperating, while being parallel to said stator plate (1), with the same groove which is responsible for the transport of the working unit (8) into said X-direction.

8. Machine according to claim 7, **characterized in that** said compensation - angle traveler (10) comprises a guide surface being perpendicular to said stator plate surface (2) and being magnetically biased against a front surface (3) of said stator plate (1), [said front surface] extending into said X-direction and extending perpendicular to said stator-plate surface (2).

9. Machine according to claim 7, **characterized in that** said compensation - angle traveler (10) comprises a second traveler surface being perpendicular to said stator-plate surface (2) and cooperating with a stator groove, [said stator groove] being formed in a front surface of said stator plate (1), said front surface extending into said X-direction and perpendicular to said stator-plate surface (2).

10. Machine according to claim 1, **characterized in that** said articultated arm (6) supports a fiber optical light guide through which laser beams (13) may be guided.

11. Machine according to anyone of the claims 1 to 10, **characterized in that** said articultated arm (6) supports electrical leads.

12. Machine according to claim 11, **characterized in that** at least some of said electrical leads serve for data transmission.

13. Machine according to anyone of the claims 1 to 12, **characterized in that** said articultated arm (6) supports leads for the transport of the working media pressurized air, liquid or gas.

14. Machine according to anyone of the claims 1 to 13, **characterized in that** said articultated arm (6) comprises two oblonged legs being connected to each other by means of a joint (7), [said articultated arm (6)] being supported near the joint by means of said stator plate (1) or an additional supporting surface (4).

15. Machine according to anyone of the claims 1 to 14, **characterized by** further comprising a second articultated arm - angle traveler (5) encompassing the other longitudinal edge of said stator plate, wherein both articultated arm - angle travelers (5) are associated to different working regions.

## Revendications

1. Machine-outil, machine de manipulation ou machine de mesure comportant un dispositif d'entraînement de réglage à 2 coordonnées pour déplacer une unité de travail (8) dans un plan de travail, qui est défini par une direction X et une direction Y perpendiculaire à la précédente, comportant une plaque à stators (1) possédant une surface plane (2) de plaque à stators et qui comporte des stators de moteurs linéaires pour l'entraînement suivant X et l'entraînement suivant Y pour le déplacement de l'unité de travail (8) dans le plan de travail, **caractérisée par** un bras articulé (6) dont une extrémité est déplacée dans la direction X par un coulisseau en forme de cornière (5) du bras articulé, qui enserre un bord longitudinal de la plaque à stators (1) et dont l'extrémité libre est reliée à l'unité de travail (8), l'unité de travail (8) étant alimentée au moyen du bras articulé (6) lui-même et/ou au moyen de lignes fixées à ce bras.

2. Machine selon la revendication 1, **caractérisée en ce que** le coulisseau en forme de cornière (5) du bras articulé comporte une première surface qui, en se déplaçant parallèlement à la plaque à stators (1), coopère avec une rainure, qui est responsable du transport de l'unité de travail (8) dans la direction X.

3. Machine selon la revendication 2, **caractérisée en ce que** le coulisseau en forme de cornière (5) du bras articulé comporte une surface de guidage qui est perpendiculaire à la surface (2) de la plaque à stators et qui est précontrainte magnétiquement contre une surface frontale (3) de la plaque à stators (1), qui s'étend dans la direction X et ce perpendiculairement à la surface (2) de la plaque à stators.

4. Machine selon la revendication 2, **caractérisée en ce que** le coulisseau formant cornière (5) du bras articulé possède une seconde surface qui est perpendiculaire à la surface (2) de la plaque à stators et qui coopère avec une rainure du stator, qui est formée dans une surface frontale (3) de la plaque à stators (1), qui s'étend dans la direction X, et ce perpendiculairement à la surface (2) de la plaque à stators.

5. Machine selon l'une des revendications 1 à 4, **caractérisée en ce que** le bras articulé (6) est un bras articulé creux à miroir, dans lequel circule un faisceau laser (13) injecté à l'extrémité située du côté du coulisseau en forme de cornière et sort de l'unité de travail (8).

6. Machine selon la revendication 5, **caractérisée par** un coulisseau de compensation servant à maintenir constante la longueur du faisceau laser depuis la sortie du laser jusqu'à son impact sur la pièce à usiner, indépendamment de la position de l'unité de travail (8), et dans lequel le coulisseau de compensation comporte une unité réfléchissante (11), qui réfléchit le faisceau laser (13) s'étendant dans la direction X d'une manière décalée latéralement dans la direction X, jusqu'à ce que ce faisceau soit injecté dans le bras articulé (6), le coulisseau de compensation étant situé à distance du rotor en forme de cornière (5) du bras articulé et étant déplacé, d'une manière commandée, respectivement dans la même direction que le coulisseau en forme de cornière (5) du bras articulé, mais uniquement sur la moitié de la section de réglage par rapport à la section de réglage que parcourt le coulisseau en forme de cornière (5) du bras articulé.

7. Machine selon la revendication 6, **caractérisée en ce que** le coulisseau de compensation est agencé sous la forme d'un coulisseau en forme de cornière de compensation (10), qui comporte une première surface qui, en s'étendant parallèlement à la plaque à stators (1), coopère avec la même rainure que celle qui est responsable du transport de l'unité de travail (8) dans la direction X.

8. Machine selon la revendication 7, **caractérisée en ce que** le coulisseau en forme de cornière de compensation (10) possède une surface de guidage qui est perpendiculaire à la surface (2) de la plaque à stators et qui est précontrainte magnétiquement contre une surface frontale (3) de la plaque à stators (1), qui s'étend dans la direction X et ce perpendiculairement à la surface de la plaque à stators.

9. Machine selon la revendication 7, **caractérisée en ce que** le rotor en forme de cornière de compensation (10) possède une seconde surface qui est perpendiculaire à la surface (2) de la plaque à stators et qui coopère avec une rainure du stator, qui est formée dans une surface frontale (3) de la plaque à stators (1), qui s'étend dans la direction X et ce perpendiculairement à la surface (2) de la plaque à stators.

10. Machine selon la revendication 1, **caractérisée en ce que** le bras articulé (6) porte des câbles formant guide de lumière, au moyen desquels des faisceaux laser (13) peuvent être dirigés.

11. Machine selon l'une des revendications 1 à 10, **caractérisée en ce que** le bras articulé (6) porte des lignes électriques.

12. Machine selon la revendication 11, **caractérisée en ce qu'**au moins une partie des lignes électriques est utilisée pour la transmission de données.

13. Machine selon l'une des revendications 1 à 12, **caractérisée en ce que** le bras articulé (6) porte des lignes pour le transport des fluides de travail que sont l'air comprimé, un liquide ou un gaz.

14. Machine selon l'une des revendications 1 à 13, **caractérisée en ce que** le bras articulé (6) comporte deux branches allongées et reliées entre elles au moyen d'une articulation (7) et prend appui dans la zone de l'articulation (7) sur la plaque à stators (1) ou sur une surface d'appui supplémentaire (4).

15. Machine selon l'une des revendications 1 à 14, **caractérisé en ce qu'**il est prévu un second coulisseau en forme de cornière (5) du bras articulé, qui enserre l'autre bord longitudinal de la plaque à stators (1), les deux coulisseaux en forme de cornières (5) du bras articulé étant associés à différentes zones de travail.
